# EUROPEAN PATENT SPECIFICATION

(11) **EP 4 297 298 B1**
(45) Date of publication and mention of the grant of the patent: **08.01.2025**
(21) Application number: 22180334.9
(22) Date of filing: 22.06.2022
(51) Int. Cl.: H04H 20/31, H04B 11/00, H04H 60/58, H04H 20/93

(54) **METHOD AND SYSTEM FOR TRANSMITTING INFORMATION AND DATA**
VERFAHREN UND SYSTEM ZUR ÜBERTRAGUNG VON INFORMATIONEN UND DATEN
PROCÉDÉ ET SYSTÈME POUR LA TRANSMISSION D'INFORMATIONS ET DE DONNÉES

(43) Date of publication of application: 27.12.2023
(73) Proprietor: Ogenus Srl, 35127 Padova (IT)
(72) Inventor: MURRONE, Luciano, 35127 PADOVA (IT)
(74) Representative: Rocchetto, Elena

(56) References cited:
- EP-A1- 3 731 112
- JP-A- 2008 129 078
- US-A1- 2014 364 092

## Description

The present patent relates to communication and data transmission systems and in particular it concerns a new system and method of information transmission.

The purpose of the system is to transmit information, such as the communication of data, bit strings, signaling and, more generally, information references.

The information is intended to be received mainly from mobile electronic devices such as smartphones, tablets and others, and processed by specific software applications installed on such devices.

There exist information transmission systems making use of visual signals, such as the well-known QR Code system.

The QR Code is a technology, now widespread and used frequently, which was developed and patented in 1994 by Denso Wave (a company of the Toyota Group).

In the QR code, the information is entrusted to a visual image, a two-dimensional bar matrix (or 2D code), consisting of black modules arranged within a white square pattern; the visual image is acquired by optical detection devices (led, webcam, ...) stored and intended to be interpreted and processed by software programs (or applications), generally activated on mobile devices.

The message associated with the QR Code consists, most often, of an information reference, such as a URL address, an implementation command, a limited binary string, which, appropriately interpreted by the software application for which it is intended, initiates an interaction or directs to a procedure that leads to the information intended to send to the end user.

The prior art document JP2008129078A relates to a system for providing a variety of information with respect tc a terminal involving sound codes.

The prior art document EP3731112A1 relates to communicating data to and from mobile devices using short codes in audible format.

### SUMMARY OF THE INVENTION

In the present patent, the information transmission system makes use of a sound transmission channel, up to now never taken into consideration and never used for communication purposes of synthesized and concise codes, meant to simplify access to information or to initiate interaction procedures for end users of modern technologies. In the present system, the information reference, i.e. the data / information to be transmitted, is contained in a sound signal, generally of short duration, composed of one or preferably more frequencies, for example between 20 Hz and 20 kHz, which can be also extended in the domain of infrasound and that of ultrasound.

The sound signal is generated within an electronic device through software and is emitted precisely as a sound signal through a loudspeaker.

The sound signal is then acquired by acoustic detection devices, such as microphones and receivers of an electronic device and more generally by electro-acoustic type transducers, stored and intended to be processed and interpreted by software programs or applications implemented in said or other electronic devices.

Some concepts that will be used in this description and which refer to the multidisciplinary technological field recognized globally as ICT (Information and Communication Technology) are defined below.

### Information

The concept of "information" is closely related to the term "meaning" and, the latter, to the idea of "purpose".

Information, in its broadest expression, could be defined as the (connected) meaning that emerges and manifests itself, on the basis of assumed conventions (codes, alphabets, languages, ...) between sentient beings or cognitive apparatuses, in all things or concepts (abstract or concrete, single or structured) which, in the shared objective reality, are recognized as having an end.

Information can have one or more expressive and interpretative forms and is expressed and differentiated in a qualitative and a quantitative value. The quality is connected to the expressive modality, the intrinsic meaning and the associated purpose, while the quantity is attributed to the measurement and to the dimensional aspects related to the adopted conventions.

In the context of ICT, the following are considered:
- the qualitative property in the general conception of the systems that must finalize the information;
- the quantitative domain for the precise definition of the devices that must manage the information.

### Code

The notion of "code" associated with information leads directly to the definition of "convention".

The code (or even language, alphabet, lexicon, ...) is the tool that allows to associate, store, manage information, according to standardized practices, recognized, shared and related to human senses and detection systems. The code is essential for the constitution of the message, that is, the most common means of expressing and transmitting information.

The code is the conventional basis used in systems, articulated and structured even in multiple hierarchical levels, identified as fundamental tools that contain information. Examples:
- The code is the range of colors in the "visual" area.
- The code are the "musical notes" conventionally used to compose, interpret, and reproduce musical harmonies.
- The code is the sign (form) of elements which, when associated, lead to the formal definition of the conventional language (alphabet).
- The code is the phonetic root from which the composite expression "sound" in the common language (lexicon) is derived.

The coding must be unique in nature, through procedures defined in advance, so that it is possible to translate the information, according to a specific code, without ambiguity. In the context of ICT, the quintessential digital code is the binary one, the simplest conventional formal system that uses only two symbols (zero and one), to which any numeric representation can be traced back with a suitable binary map.

### Communication

The definition of "communication" is directly linked to the concept of "information". A shared objective reality presupposes the possibility of having information in common (between sentient beings or cognitive apparatuses); this is possible only if the latter can be transferred between individuals or from one place to another: this peculiarity (the transfer of information) is recognized as communication (mainly entrusted to messages).

In modern society and in universal conventions, there is a tendency to make the concepts of "communication" and "information" coincide, but in the engineering field, communication must only be understood as "transmitting information". Therefore, on the basis of a common conventional code, it is necessary to assume a source and issuer of the information, a means (or channel) of transmission, a subject receiving and interpreting the information.

The concept of communication is also expressed in a quantitative and a qualitative value.

From an engineering point of view, the quantitative concept of communication expresses, in logarithmic terms, the uncertainty of a message among those considered conventionally possible. In practice, it refers to the same notion of interpretation assumed in the information (in essence, it concerns also in this case the measurement and the dimensional aspects related to the adopted conventions), the quality is instead specifically defined as the goodness to reconstitute in the message that arrives to the recipient the same information originated by the sender (in interpretative terms).

In the context of ICT, the following are considered:
- the quantitative domain for the precise definition of the devices that must manage the communication;
- the qualitative property in the precise conception of the systems that have to transfer the communication.

### The communication scheme

In the communication scheme, the sender and the recipient are, respectively, the source of the information and the person designated to receive it (and to interpret it).

The mathematical model of communication envisages, as a Communication Process, an exchange of information between subjects who assume (and exchange) the roles of sender and recipient, and this every time the transmission of information takes place (mutual communication).

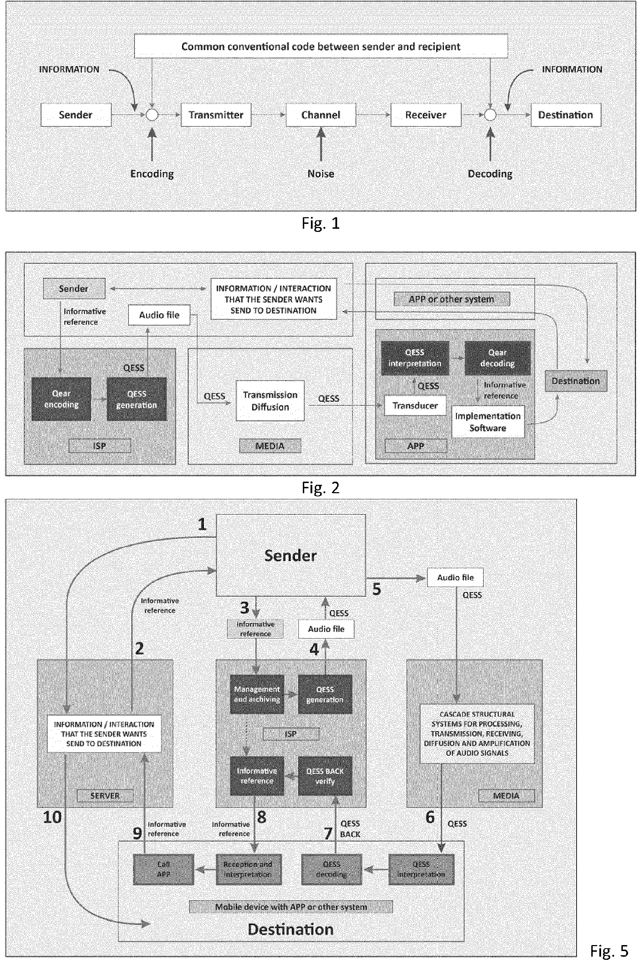

For the purposes of this report it is assumed that the Communication Process is unilateral (or unidirectional from a sender to a recipient), taking into account that similar and more complex inter-relationships could occur considering the alternation of the exchange of roles, the feedback and the multiplication of the functionalities analyzed in the fundamental scheme (Figure 1).

Figure 1 shows the fundamental scheme of the communication process.

This interpretation of the Communication Process is better suited to most of the applications envisaged for the information transmission system described and claimed in the present patent application.

As can be seen in figure 1 1, the exchange of information between Sender and Receiver is carried out on a physical level by providing for a transduction towards the signal domain through the Coding operation (or also: modulation, synthesis) and, by inverting it, through the operation of Decoding (or also: demodulation, analysis). The Transmitter is therefore the physical element that carries out communication in practice, interacting with the Receiver, through a Noise-affected Channel.

These elements will be specified below, with particular reference to the new information transmission system.

### Sound communication

Sound communication can be classified into various forms.

Sound communication associates and transmits information through a sound effect, perceptible by the human hearing system or by an acoustic detection device.

Among the sound communications we can include:
- a vocal message, that is, expressed in words and phrases pronounced by a sentient being (or by a device that provides verbal meaning to the sounds emitted) and intended to be listened to and interpreted according to conventionally shared phonetic canons;
- a musical harmony, more or less structured, coordinated and rhythmic (possibly combined or integrated with appropriately modulated phonemes and words) with the aim of being interpreted as a melodious motif and composition, destined to be perceived to arouse pleasant sensations, instinctive emotions and / or intellectual satisfactions;
- a more or less continuous signaling message (sound signal), variously (or solely) composed of audio frequencies (but which could also belong to the infrasound and / or ultrasound domain) of limited duration in time and intended to be decoded according to regulated interpretative rules.

### Informative reference

The innovation introduced by the new information transmission system involves the generation of a sound signal that contains information. This content is often not exhaustive and is identifiable as a further association with a pointer or reference that returns or initiates procedures that lead to predetermined actions or information.

In our system, the sender produces an information reference (a series of numbers and / or lexicons, a string of alphanumeric characters, a URL address, a series of data or conventional parameters associated with an APP, ...) which constitutes the core of the new system transmission of information intended for the software application (APP).

An "Information Reference" is defined as that part of the associated information, in this information transmission system, that the sender wishes to reach the potential recipient. In practice, the sender entrusts to a sound signal, coded, modulated and produced according to the protocol of this system, the Information Reference which is the one to be interpreted by specific APPs.

In the event that the Information Reference is a URL address, the proposed system is particularly advantageous since it will be possible to send the encoding of this address, while the contents of the information can be entered and modified by the sender directly on the Internet page.

Alternatively, it is possible to provide the Information Reference as a message that is sent to the Internet Service Provider (ISP) to request authorization to access the information content. In this way, the ISP will control the recipients' access to the information that the sender wants to transmit. A diagram with the relative explanation of the latter solution is shown in a subsequent chapter called "ISP-BACK".

### The sound signal

The sound signal produced, or the signal encoded according to the coding protocol of the new information transmission system, is an audio file that will be stored, managed, processed and transmitted through ICT channels and equipment, such as in broadcasting systems.

The sound signal that a Sender must send is obtained with a procedure, for example, commissioned and performed by an ISP which, enabled to use the new information transmission system and equipped with a specific development program, encodes the Information Reference, i.e., the information to be transmitted, which was provided to him by the Sender.

The ISP then encodes this information and includes it in a digital audio file, for example in mp3, wav, midi, aac, etc. format, which will be transmitted to the client, that is, to the sender.

The Sender, in turn, may use said audio file for its purposes of diffusion among end users or interaction with end users.

The sound signal is also recognizable by a human user, however it can also be perfectly integrated into multimedia transmissions, together with forms of vocal message or musical harmony.

The sound signal contains, appropriately coded and digitally modulated, information that can only be interpreted through software applications (programs).

Once it reaches a receiver, i.e. the Receiving subject, said signal is managed by a program (APP), where it is interpreted and decoded, operations that will return the Information Reference, intended to initiate procedures to access the information / interactions that the sender wishes to be sent to the recipient.

### Steps of the system

The use of the new system presupposes that the methods of use have been foreseen, or the procedures that are assumed for its advantageous exploitation. A possible operational structure for the new information transmission system is set out below.

The generic transmission scheme, illustrated in Figure 2, brings together the functionalities and operational purposes of the new information transmission system and briefly outlines its operation. The purpose of the system is, ultimately, to lead the user towards the information / interaction that the sender wishes to send to the recipient. The areas subject to innovation, subject to patent development, concern:
- in the ISP management sector, the Coding and Generation of the sound signal;
- in the context of software applications (APP), the interpretation and decoding of the sound signal.

Figure 2 shows the generic transmission scheme of the new information transmission system.

The preliminary activities carried out by the Sender, or by those who wish to send specific information to (or implement an interactive activity with) the Recipient user, provide for the preparation of the information / interaction (generally published / activated on the web) and its identification (with data, parameters and URL address) in an Information Reference.

The Information Reference, by its nature generally complex, articulated and difficult to be reproduced and / or memorized, can be sent to the recipients with a sound signal. For this reason, it must be encoded (according to the encoding protocol, described below) and included in an audio file (sound signal), an operation that can, for example, be carried out by an authorized ISP.

Once the audio file containing the information to transmit, encoded and generated by the ISP, has been obtained, the Sender has the possibility to disclose / transmit it (on broadcasting channels, through multimedia devices, by means of loudspeakers in public environments, etc.), in such a way as to make it reach the potential Recipients concerned, who, equipped with electronic devices in which said APP is installed that allows to interpret and decode the audio file, will thus be able to access, with the reconstituted Information Reference, the information / interaction prepared from the Sender.

### Boundary conditions

In order to define the specifications of the new system in a coherent and exhaustive way, the main boundary condition is reported which is considered essential for the correct development of the theoretical scope of innovation object of this study.

### Contrast noise through coding

It should be noted that, in practice, the sound signals are affected by noise. This term means, in the field of engineering, an unwanted signal that is opposed to the so-called useful signal, which is instead explicitly designed for the transport of information. In the case of sound communication, noise can be both an unwanted acoustic signal, as it is understood in common language, as well as a secondary effect due to the imperfections of electrical devices capable of communicating the signal. In any case, the presence of noise in communications not only does not provide any contribution to the transport of information, but makes it more difficult to execute.

The encoding of an information content in a message to be transmitted with a suitable signal, which in the case in question is a sound signal, therefore has a double function of conventional mapping that can be interpreted but also of contrasting noise.

Since the noise generally has random and poorly structured characteristics, in the presence of overlap between the useful signal and the noise, it is still possible to isolate the useful signal as it possesses characteristics of an internal structure, as opposed to noise.

This property is generally present in any coding, however the theory identifies additional techniques, particularly suitable for countering noise even when the corruption it brings to the useful signal is considerable. Beyond the specific detail of the particular encodings, the general principle is to introduce redundancy in the signal, or a greater degree of structuring, not to increase the information content but solely aimed at contrasting the noise.

In light of this principle, the encoded sound signal must have both of these aspects related to the coding, that is, not only provide for a conventional mapping of the information, but do so in such a way as to present characteristics of robustness with respect to noise. In other words, the specifications of the coded sound signal guarantee that it is able to transmit the information content even in the presence of noise, within certain levels. The performance of the new system is actually linked to the ability of this to happen.

### The coding protocol

The subject of innovation, subject to patent development, consists of the coding system and the generation of the encoded sound signal, expressed in an audio file, as well as the interpretation and decoding of the latter for the recomposition of the original Information Reference , i.e. the content of information to be transmitted. Both of these processes will be elaborated and derived below.

The coded sound signal, produced in the form of an electrical signal, has in its mathematical envelope the information that the sender wishes to be transmitted to the recipient apparatus. This can be done through acoustic synthesis programs that are able to generate, modulate and compose audio frequencies according to defined standards. The rules for coding the sound signal will not simply define the frequencies to be associated, but must also introduce redundancy in the data to be transmitted.

### Preliminary technical notations

Two-dimensional structures for information coding are already applied in the field of graphic signals. In this context, the reference one-dimensional structure is the one used for bar codes, which provide a reliable graphic signal typically used for product tracking. Reading the code through an optical scanning device allows it to be interpreted quickly and effectively.

Subsequent evolutions of this technology towards a two-dimensional structure are the graphic codings, such as the QR Codes but also the VeriCode and the Data Matrix, which increase the data content compared to the barcode for the same graphic area. The present information coding system, on the other hand, involves a sound signal that presents a two-dimensional mapping along the directions of time and frequency.

This solution, suitable for still practically unexplored scenarios, offers the advantage of efficient data transport in a similar way to spatial two-dimensional code. In its elementary version, the coded sound signal of the present patent application has characteristics of content and robustness similar to those of a two-dimensional graphic code, since, even in the presence of a different physical signal format, it has similar structural properties.

### The structure of the message - coded sound signal

The coded sound signal, before being disseminated, can be processed, transformed and adapted, but, originally it must be produced, that is, the information to be associated must be prefixed, it must be previously coded.

Assuming that the information is digital (bit strings), it is necessary to adapt it in a specific structure, so that it assumes a defined conformation, to guarantee the possibility of an adequate level of security, in terms of specific preliminary encryption, and reliability, in terms of redundancy and correction for the reconstruction of the original information. It is also possible to foresee that, unless further verification and management procedures are carried out, the individual signals may vary according to predetermined frequency ranges and predetermined time steps conveyed.

The information that must be associated with the encoded sound signal, or that which is completely aggregated in the sound signal, is structured and made up of the following parts:
- Opening Marker of the signal or "Opening Marker", which may be in the form of an associated jingle recognizable by the detection systems;
- Core of the signal, or "Info Core", i,e., the core or central part that contains the coded Information Reference, i.e., the information to be transmitted;
- Closing Marker of the signal or "Closing Marker", which may be in the form of an associated jingle recognizable by the detection systems.

The coded sound signal is therefore temporally limited by two sequences, easily recognizable and identified as opening jingle (Opening Marker) and closing jingle (Closing Marker). These conventional sequences, in addition to having the function of denoting the beginning and end of the coded sound signal, also provide a unique identifier of the version used for the two-dimensional coding of the information.

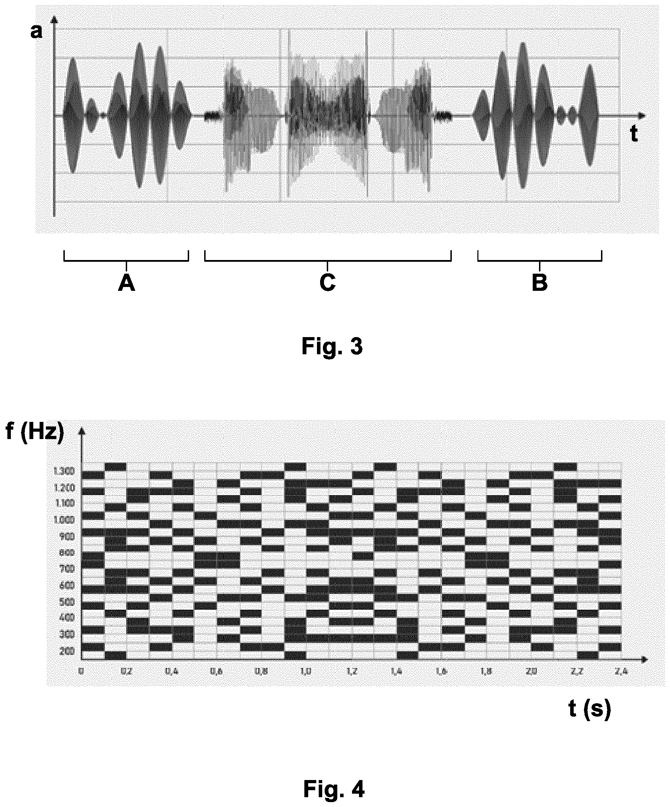

Figure 3 shows a temporal representation of the structure of the encoded sound signal, where the signal opening marker or "Opening Marker" is indicated with (A), the signal core, or "Info Core", is indicated with (C ) and the "Closing Marker" is indicated with (B).

Since the structure of the message to be transmitted must offer characteristics of robustness with respect to noise, the following measures will be used in the actual encoding of the coded acoustic signal.
→ The opening and closing markers must be strongly structured; in fact, they constitute a control element of the communication which does not carry any information, except that of the beginning or end of the message. However, they will be of adequate length and composition to allow their recognition both by automatic devices and by a human user, even in the presence of noise;
→ The signal core or "Info Core" will be expanded following the introduction of redundancy in the signal, in order to provide adequate protection against noise. This redundancy is the object of the coding operations, where it is introduced, and decoding, where it is exploited to counteract the noise.

### The configurative model of the "Info Core", i.e. the signal core

The information reference, i.e., the set of information to be transmitted, according to the predefined methodological scheme, is transformed into a succession of signals of predetermined duration with overlapping frequencies over time (Info Core).

The Info Core contains a layer of coding implemented on several directions. As a main example, consider a two-dimensional arrangement of the digital values of the signal along the directions of time and frequency. In the simplest possible version, the digital values are binary (0/1, i.e., absent / present). It is also possible to plan to expand the coding layer into several levels, using disjoint frequency ranges.

Within the coding layer, an appropriate subdivision of time and frequency step is identified, which provides the elementary resolution of the coding symbols.

### Two-dimensional coding

An example of a possible model could be the Two-dimensional Coding, which takes its cue from the information configuration of the QR Code, whose graphic reference model, that is a two-dimensional image used for the transport of coded information, generally adopts a matrix of monochromatic pixels (with binary value 0/1) square of standard dimensions, variable according to the purposes and the information content to be disclosed.

To obtain the same performance in the encoded sound signal, the following choices can be made.
- A value N is first fixed, which depends on the characteristics of the coding format used, for example N = 24.
- A sufficiently contained frequency range is used including A values chosen as harmonics, ie the fundamental frequencies that may or may not be present in the acoustic signal.
- An overall duration of the acoustic signal of a few seconds is set, divided into T time intervals, generally of identical duration.

A formatting analogous to a square spatial representation would correspond to imposing A = T = N. For practical reasons of implementation, however, it is possible to choose a rectangular rather than square representation, in which the number of harmonics A does not coincide with the number of time intervals T, but a similar value is retained for the product A x T.

Figure 4 shows an exemplary hypothesis of the Time / Frequency matrix that can be implemented in the "Info Core".

### The format of the encoded content

The overall content of the two-dimensional data structure is the result of an encoding operation carried out on an initial message (payload), the maximum allowed dimensions of which depend on the specific format used (which determines the N value), as well as on the robustness settings as far as the corrective capacity of the code is concerned.

In fact, as justified by information theory, error control occurs by adding appropriate redundancy to the payload, which improves its recognition even in the presence of noise. It is also possible to provide for a dual way of formatting the encoded content, so that the generated two-dimensional structure is:
- minimum possible frequency dimensions to contain the original message and the redundancy introduced, for example by limiting the number of harmonics used;
- of minimum possible duration to contain the original message and the redundancy introduced.

Another design choice concerns the specific coding technique used for the generation of redundancy. In this context, it is possible to use highly efficient binary block codes such as Reed-Solomon codes, already used by graphic codes for error protection. Similarly, to similar systems in the field of graphic signals, these choices allow protection from error even in the case of loss of 30% of the encoded sound signal.

### Generation of the acoustic signal

The part relating to the "Info Core" in the coded sound code corresponds to the sequencing of the time-frequency matrix structure according to the format specified in the example model described above. A simplified acoustic generation, in a server accessible via the web, could provide that, upon receiving the sequence of characters to be encoded, it directly generates the sound signal according to the encoding and structure shown, and allows it to be saved in standard audio file format, such as mp3, wav, midi, aac, ...

### Interpretation and decoding

The system's sound information receiver comprises an electronic device in which a software that interprets and decodes with certainty the encoded sound signal detected by a microphone connected to the Recipient's device is installed and running. In practice, the electronic device of the Recipient and the Receiver coincide.

The coded sound signal, once encoded and broadcast or transmitted, to be perceived by electro-acoustic transducers, must be demodulated to extract the transmitted content and then decoded to obtain the original information. Through acoustic analysis programs, which are able to filter, select and transpose the audio frequencies, the demodulation system, after making the corrections, extracts and interprets the original information content, which will be used for further processing to implement the information purposes of the system.

In the aforementioned model, the analysis of the generated coded acoustic signal then takes place through the following two steps.
1. Interpretation of the structure of binary values in the directions of time and frequency starting from the acoustic signal; this operation is carried out by an electroacoustic apparatus connected to an appropriate application that reads the frequency occupation values of the different harmonics and provides a coded binary output sequence.
2. Decoding of the binary sequence to obtain the original payload message, correcting
the error, i.e., removing the redundancy and using it to verify the values received. Depending on the implementation, the latter operation can be carried out locally, i.e. on the recipient's mobile device, as long as the encoding format and the order of the frequency values adopted are communicated, in the same signal or by other means. Alternatively, it is possible to provide an external architecture, through a reference server, towards which the binary sequence is transmitted and interpreted.

### Encryption

To allow a flexible and general implementation, the coding and decoding scheme operates without any structural coding. However, since the content of the payload message is general, end-to-end encryption can be introduced into the system to protect any sensitive information.

### Final technical considerations

The reception of data through the new information transmission system takes place automatically and, therefore, has a higher execution speed than any other form of data exchange that takes place internally on the acoustic channel. Although other forms of data diffusion (or exchange) are possible through sound communication channels, these are not so general, as they depend on the technology and the equipment of the transmission and reception equipment.

The coded sound signal of this new system, on the other hand, is permanently inserted within the diffused acoustic content, for example, similar to the insertion of QR codes in magazines, flyers, road signs, screen videos, and so on. The possible configurative models, adaptable to the sound channel and associable with the system, such as the proposed two-dimensional coding example, have great data storage capacity, always in relation to what is found in graphic systems based on the visual channel. Considering that interfacing with mobile devices or intelligent audio management systems allows rapid integration with text and video multimedia content, for example via hyperlinks. The previously exemplified structure of two-dimensional time / frequency collocation of binary values is only one of the possible structures that can be adopted in the coding of the sound signal, it is also possible to realize sequentialization models, multi-level modulation, differential representation, and others.

As contemplated for the QR Code, also the present system of transmission of information by means of an encoded sound signal could provide for a multi-modal management for the types of use of the Information Reference: for example, the purposes of the encoded sound signal could be associated with a code. static or dynamic type.

The information (the Information Reference) that will be entrusted to the transmission system, as well as the results of the coding, generation, interpretation and decoding of the encoded sound signal, will be classified, registered and stored in a database archive, exclusively managed by the ISP authorized to use the system.

### Software

To preliminarily define the synthesis (coding and generation) and analysis (interpretation and decoding) systems that will operate on the encoded sound code, the main functions of the software programs that must be implemented in the procedure of the new information transmission system are outlined.

### Coding and generation applications

The program intended to synthesize the coded sound signal, placed for example in a server managed by an ISP, can operate according to the following application procedure.
→ The program receives an input file that contains the Information Reference, which can be a URL address, or any other information to be transmitted. The file is defined and normalized according to fees to be established in relation to the configurative models.
→ Based on pre-established parameters and / or included in the file itself, the Information Reference is encrypted and / or stored and / or associated with a so-called EIR (Encrypted Information Reference) file.
→ The program then modulates / synthesizes the EIR file into an enveloped sound signal, according to techniques that could provide for optimization (redundancy, error correction, noise reduction).
→ Finally, an audio file is generated which represents the encoded sound signal (in mp3, wav, midi, aac,...).

### Acquisition and decoding applications

The analysis software, residing in a device accessible to the final recipient, can be implemented in specific applications (APP), created for certain purposes, or have standard interpretation / implementation characteristics, for example as an exclusive addressing service dedicated to the Information Reference.

The generalized enforcement procedure provides for the following operations.
→ It activates and stops by means of a specific sound signal which conveniently consists of said opening marker or "Opening Marker" and / or said closing marker or "Closing Marker" - generically associated with a very short musical jingle composed on purpose.
→ Records, interprets, that is, decodes but, generally, does not activate procedures, and stores the notification received (the Information Reference).
→ Provides for implementing the features, actions or interactions provided for in the purposes of the application itself; for example, notify the user of the basic information of the Information Reference and subsequent operational options.
→ The program should also give the possibility to consult the archive of reports received, to delete them, to activate them, to forward them, to share them, etc.

### Comparative Notes

From an application point of view, the use of the QR Code generally involves a direct and intentional interaction on the part of the recipient of the information, i.e., the user "sees" the QR code, that is the distinguishable box that identifies it and, voluntarily, he frames it with the webcam of his smartphone or tablet. The software residing in the electronic device interprets the QR code by starting a specific operation that leads to the information prepared by the sender.

The use of the new system generally assumes an indirect and predisposed interaction in the mobile device of the recipient, who "hears" the coded sound signal emitted by a sound source detecting it, automatically, through the microphone of his smartphone or other device. The resident software interprets it by starting a certain operation on the device, such as storage, notification, etc., which, subsequently, at the request of the recipient, leads to the information prepared by the sender.

In practice, the QR Code is positioned visually and spatially, being reproduced in the form of iconography in predetermined places. The potential Recipient sees it and, only if interested, activates his reading device on his mobile device, frames the code and is directed, generally immediately, to the desired information / interaction of the Sender. The present new information transmission system, on the other hand, is broadcast sonically and temporally, that is, acoustically diffused at certain times by predisposed audio systems. The mobile device (with APP active) of the user, i.e. of the recipient, immediately detects the coded sound signal and stores it, preparing a notification for the potential Recipient, who, when he wishes, starts the procedure to access the information / desired interaction of the Sender.

### Multimedia and the aid of sound

A general overview of the current state of the art of multimedia communications is provided, also outlining the importance of sound, integrated and provided in almost all applications and information and dissemination packages.

Multimedia is defined as the characteristic of a communication that integrates multiple expressive forms in the same support or information context. Generally, multimedia contents are meant as usable, shareable and possibly modifiable anywhere and on different devices.

Leaving aside the functional aspects of multimedia, which highlight how this type of communication affects culture, economy, sociality, etc., consider only the physical aspects relating to the various information contents that affect multiple sensory channels.

We speak of "multimedia content" when to communicate information for specific issues, we make use of many and different means of mass communication or media used more or less simultaneously, for example: videos or animated images, iconographies or static images, audio, such as music and / or speech, written text or publications, and so on.

Multimedia is a prized fruit of modern technologies and is, very often, accompanied by interactivity. Thanks to its expressive-communicative potential, multimedia has spread to many areas of society, involving all forms of communication. The web and new media are considered, by their very nature, to be multimedia and interactive.

The audio channel is used as an acoustic media support, or generally intended for listeners (living beings) who directly perceive and interpret the information content carried by sound waves that reach the hearing system.

The sound effects, music, speech, etc. entrusted to the audio channel, now present in numerous multimedia systems, provide an indispensable aid in the context of communication. But the audio channel is currently limited in the amount of information it is able to deliver to the listening user.

The new information transmission system, using the audio channel as a transmission medium, considerably expands the information that can be functionally integrated into the multimedia and interactive aspects of the communication itself.

### Telecommunications and the power of broadcasting

The fields of application of the new information transmission system are innumerable and rely on the audio channel, which is considered available in many communication situations.

By way of illustration, the considerations regarding telecommunications and the so-called "broadcasting" are reported.

In telecommunications, "broadcasting" refers to the transmission of information from a transmitting system to receiving apparatuses having general characteristics that are not specifically defined.

For example: Radio and Television belong to broadcasting systems. The term generically indicates the "one to many" transmission model, assuming an extremely high-quality level for the professional tools used for these purposes, i.e., broadcasts. An analogy, in the system of computer networks, corresponds to the term "streaming": a data packet can be delivered to all computers connected to the network, for example, to all those on an ethernet network segment, or to all those of a IP subnet, etc., through interactive procedural procedures.

The most classic example of a broadcasting system consists of a high-power transmitter system and numerous receivers scattered throughout the area, such as radio equipment in mobile cars, or televisions in homes. In this way, all receivers located in the coverage area of the transmitter will pick up the signal, but the broadcaster will not be able to know exactly who they are communicating with. Broadcasting is one way. The information is sent without a return channel and without the certainty that it will be able to be received by all those who are the recipients in the intentions of the sender.

Nonetheless, the power, effectiveness and usefulness of broadcasting systems are universally recognized and tested.

The decoded sound signal can be entrusted to different telecommunication systems, but the one that is certainly and naturally more suitable is broadcasting. A sender who uses, for example, the radio or television to disseminate, on a commercial or public service level, information that uses only or even the audio channel, often does not have much time to send, illustrate and complete his message, without considering the possibilities of interaction that could be activated and integrated into the mobile devices, now available to everyone.

The new information transmission system, which can be adopted in broadcasting communications, would thus become very useful and appreciable, because it is practical for the recipient and advantageous for the sender.

### Applications, purposes and uses of the new information transmission system

For guidance only, by way of example and not exhaustive, the application areas are listed, with references to the use and purposes, of the new system. For each of them, multiple and diversified implementation projects could be explained, analyzed, developed and synthesized, aimed at achieving objectives of social, cultural, didactic, entrepreneurial, economic, ...

The fields could include communication and diffusion in those situations or contexts in which sound diffusion and amplification systems are used, such as for example:
- Radio and Television (broadcasting)
- Cinemas and theaters
- Public places and events
- Schools and universities
- Meetings, conferences and congresses
- Events and fairs
- Malls, commercial centers, and shops
- Receptive, convivial and refreshment environments
- ...

With the adoption of the new system, in each of the aforementioned relational areas, the Information References can be addressed for the purposes of the information / interaction that the sender wishes to send to the recipient. The following list summarizes the definition of some of the countless possibilities.
- Updates and insights: Documents or information sources of a different nature, in aid of the display of news reports or cultural programs, while they are broadcast on the radio or on television (broadcasting).
- Reasons and correlations: Translated or interpreted texts, accompanying illustrations, implementation of procedures, ... in aid of broadcasts, mainly radio, in Meetings, Conferences and Congresses, during teaching at School or in Universities, in Receptive, Convivial and Social Environments Refreshments, ...
- Advertising and promotion: Notes, iconographies, animations and additional data, references and contact details, discount coupons, special offers, ... increase the validity and opportunities of commercial advertisements in audio and video spots broadcast on radio or television, but also in Events and Fairs, in Malls and Commercial Outlets, ...
- Competitions and games: Instructions, rules and regulations, invitations to participate, interaction on entertainment occasions, ...
- Surveys and surveys: Statistical research, direct or indirect surveys, interactive questionnaires in real time, ...
- Utilities and equipment: Attributions, stories, references, testimonials, certifications, reviews, images, ...

Use can also be envisaged in times and situations in which interactions between mobile devices, or between the latter and fixed devices, are made immediate and practical, in operational circumstances that require data exchange or an interrelation, such as for example:
- access and / or direct connection for the transfer of data, information and iconographic sources;
- the transmission of identification credentials and accreditation operations;
- redirection to sources of in-depth information;
- the start of interactivity operations between applications;

### Innovation area

Today's technology entrusts to the "visual" type transmission the possibility of making available codes which, detected by optical reading devices, are easily and immediately interpreted by software programs which translate, mostly immediately, the information that a sender wishes to be sent to the recipient concerned.

The innovation of the present system refers to an acoustically perceptible and detectable code by microphones (or electro-acoustic transducer devices) for inputting information into a computer or the like and, more particularly, to a sound signal composed of different frequencies variously modulated that "carry" data in binary language. The structure of the acoustic signal is such that it is encoded in a model with specifications that guarantee an adequate level of security (encryption) and reliability (reconstruction of the original information).

A process of production and emission of a sound signal, to be acoustically diffused in a transmission medium such as, for example, air, provides that the original information, which in our case is in the form of a binary code available as an electrical signal, is subject to a conversion, even multiple if necessary, and to an implementation in modulated frequencies attributable to the sound domain, including infra- and ultrasound.

The electrical signal is subsequently amplified and entrusted to an electro-acoustic transducer, that is an actuator which converts it into sound pressure waves, such as a loudspeaker, and which provides for propagation in the transmission medium.

A generally known method of acquiring, recording and decoding a sound signal includes steps to detect the sound by means of an electro-acoustic type transducer device such as a microphone and, after detecting the specially modulated frequencies, relying on a software program that transposes the code in terms of bits. The latter operation must provide, without ambiguity, the original binary code, that is, the one that has been encoded to be transposed and broadcast in the sound signal.

### Control procedure or ISP-BACK

It is possible to provide that the Information Reference does not directly contain the information / data that the Sender wants to transmit, nor the URL address to access content, but rather that it contains a command to initiate an authorization request procedure.

The recipient's electronic device will receive the coded sound signal which is processed by the program installed in the device. This program activates the ISP authorization request procedure, for example by calling, sending a message, accessing the website, etc. With this procedure, the Recipient then requests the ISP to be able to access the content of the Information Reference. At this point, the ISP checks the Sender's authorization request and sends the Recipient, i.e., the program installed in his electronic device, the Information Reference containing the data / information that the Sender wants to transmit.

This procedure prevents the Recipient from accessing unverified or unauthorized content, for example via a URL address.

The scheme of the ISP-BACK procedure is shown in figure 5.

Therefore, with reference to the preceding description, the following claims are expressed.

### Preferred solution

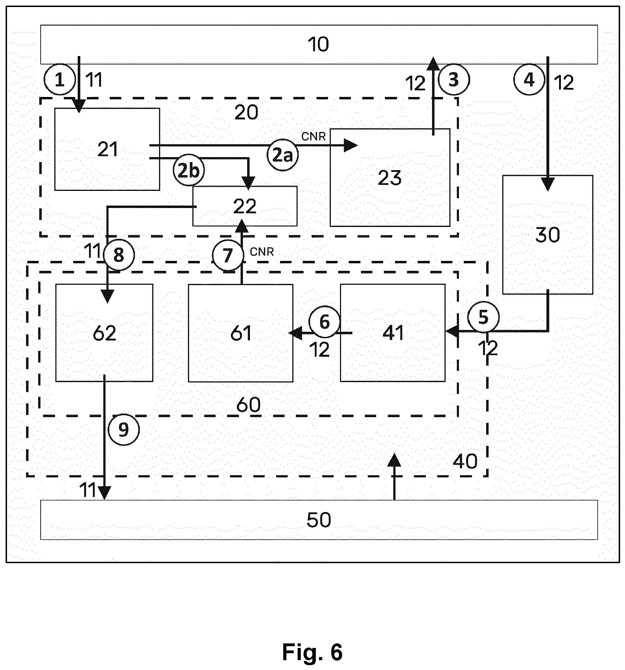

In the preferred solution, the new information transmission method comprises the steps outlined in Figure 6 and described below:
1) the primary user 10, i.e. the sender who wants to send a message in the form of a sound signal, contacts or uses the service provider 20, called TIScode SUPPLIER: the primary user 10 sends the message 11 he wants to send, which they can be in fact any type of information and is called INFOTIS, at the receiving form 21 of the supplier 20. For example, the primary user 10, to do this, accesses the website of the supplier 20 and sends the message 11. The service provider 20 then receives in input a digital file containing the message that the sender primary user 10 wants to send to one or more recipients end users 50.
2) the receiving module 21 performs three actions here, namely:
   2a) assigns a code called CNR to message 11;
   2b) stores the message in a database 22 called TISTORE; and where the CNR code is a datum that identifies the position of the message in the database; in practice, the service provider 20, residing on a remote platform, interfaces with the primary user 10 by means of said reception module 21.
3) The service provider 20 includes an encoder 23, which receives the CNR code and transforms it into a sound signal 12, which is provided to the primary user 10 for its use. The sound signal 12 is therefore not the encoding of the actual message 11, but of the CNR code;
4) the primary user 10 can use the sound signal 12 by broadcasting it through any transmission channel 30 that allows the transmission and diffusion of sound: radio, TV, loudspeaker, etc., generically called MEDIA
5) the sound signal 12 emitted by the transmission channels 30 is detected by a microphone or detector 41 of a device 40 in the possession of a user 50, who is the recipient of the message; the device 40 is an electronic device, such as for example a smartphone, a tablet or a PC, in which a specific application 60, called APP TIScode, is installed;
6) the detector 41 sends the sound signal 12 to the decoder 61 of the application 60, which decodes it, obtaining the CNR code.
7) The CNR code is sent to the database 22 TISTORE, which
8) returns the message 11 contained therein, via connection to the data network, to the application 60 installed in the device 40 which revealed the sound signal 12. Basically, the database 22 returns the message only upon delivery of the corresponding CNR.
9) The reader module 62 of application 60 finally provides to display and / or interpret and / or interact with the message 11, making it available to the end user 50.

## Claims

1. Method of transmitting a message (11), between sender (10) and one or more recipients (50), the method including the following steps:
- defining said message (11) to be transmitted by said sender (10) to at least one recipient (50);
- sending said message (11) in the form of a digital file to a receiving module (21) of a service provider (20);
- archiving said message (11) in a database (22);
- assigning a code (CNR) to said message (11), where said code (CNR) is the position of said message (11) in said database (22) and contains a command to initiate an authorization request procedure;
- coding said code (CNR) into a sound signal (12) in an audio file;
- returning said sound signal (12) to said sender (10);
- entrusting the sound signal (12) to a transmission system suitable for broadcasting, for example radio or television, and diffusion of said sound signal (12) through a transmission channel (30);
- receiving said sound signal (12) by a detector (41) of an electronic device (40) in use by said receiver (50), wherein a specific application (60) is installed on said electronic device (40);
- decoding said sound signal (12) to obtain said code (CNR), wherein said decoding is performed by said application (60), which activates the service provider (20) authorization request procedure;
- communicating between said application (60) and said service provider (20), where said service provider (20) receives from said application (60) said code (CNR) and checks authorization request to prevent access to unverified or unauthorized content;
- returning said message (11) corresponding to said code (CNR);
- displaying said message (11) on said device (40) said recipient (50).

2. Method of transmitting information or data in general, as per claim 1, wherein said generation of said coded sound signal occurs at least according to the following steps:
- Phases of transposition of said information or data to be transmitted in one or more bit strings or in one or more character sequences to be encoded;
- Encoding phase, i.e., transformation of said one or more strings or sequences into signals of predetermined duration with overlapping frequencies over time;
- Saving in one or more digital audio files.

3. Method of transmission of information or data in general, as per claim 2, wherein said digital audio files are in mp3 or wav or midi or aac format or other format that can be reproduced and / or read by an electronic device.

4. Method of transmission of information or data in general, as per claim 1, wherein said coded sound signal is composed of one or more sound frequencies and possibly also infrasound and / or ultrasound.

5. Method of transmitting information or data in general, as per claim 2, wherein in that said coding step comprises a two-dimensional coding step which includes at least the following steps:
- Determination of a frequency range containing A values chosen as harmonics;
- Determination of the overall duration of the sound signal, in turn divided into T time intervals;
- Realization of a two-dimensional matrix A x T;
- Insertion in said two-dimensional matrix of digital values according to a predefined coding scheme, possibly aimed at introducing redundancy;
- Transduction of the values of the two-dimensional matrix in the acoustic domain, reading them according to the directions of time and frequency.

6. Method of transmitting information or data in general, as per claim 2, wherein said coding step also includes the introduction of the signal redundancy into the coded sound signal for noise attenuation.

7. Method of transmission of information or data in general, as per claim 2, wherein said coding step also includes the introduction of an end-to-end encryption.

8. Method of transmitting information or data in general, as per claim 1, wherein said coded sound signal comprises:
- at least a first part or opening marker (A) which indicates the start of signal transmission;
- at least one central part (C) which contains said information or data to be transmitted encoded;
- a possible third party or closure marker (B) which indicates the end of the signal transmission.

9. Method of transmitting information or data in general, as per claim wherein said decoding step of said coded sound signal takes place according to the following steps:
- Interpretation of the structure of digital values in the time and frequency directions of the received sound signal;
- Decoding of the digital sequence with removal of redundancy.

10. Method of transmission of information or data in general, as per claim 1, wherein said information or data to be transmitted include a URL address.

11. Message transmission system configured to carry out the method as per one or more of the preceding claims, wherein the system comprise:
- a receiving module (21) of a service provider (20);
- a database (22);
- at least one electronic coding device (23) in which at least one processing program suitable for coding said information or data in said at least one coded sound signal is installed;
- at least one transmission channel (30) with at least one loudspeaker capable of emitting said coded sound signal;
- at least one microphone adapted to receive said coded sound signal emitted by said at least one loudspeaker;
- at least one electronic device of the recipient (50), connected to said microphone and in which at least one processing program is installed, capable of at least decoding said coded sound signal.

12. System as per claim 11, wherein said at least one electronic device of the recipient is a mobile phone or a tablet or other electronic device comprising said microphone and in which said at least one program for decoding said coded sound signal is installed.

13. System as per claim 11, wherein said system comprises at least one further electronic device of the sender (10) able to receive said coded sound signal from said at least one electronic coding device and able to send said coded sound signal to one or more sound emission systems comprising said at least one loudspeaker.

## Patentansprüche

1. Verfahren zum Übertragen einer Nachricht (11) zwischen einem Sender (10) und einem oder mehreren Empfängern (50), wobei das Verfahren die folgenden Schritte beinhaltet:
- Definieren der besagten Nachricht (11), die vom besagten Sender (10) an mindestens einen Empfänger (50) übertragen werden soll;
- Senden der besagten Nachricht (11) in Form einer digitalen Datei an ein Empfangsmodul (21) eines Serviceproviders (20);
- Archivieren der besagten Nachricht (11) in einer Datenbank (22);
- Zuweisen eines Codes (CNR) zur besagten Nachricht (11), wobei der besagte Code (CNR) die Position der besagten Nachricht (11) in der besagten Datenbank (22) ist und einen Befehl zum Initiieren eines Autorisierungsanforderungsverfahrens enthält;
- Codieren des besagten Codes (CNR) in ein Tonsignal (12) in einer Audiodatei;
- Zurücksenden des besagten Tonsignals (12) an den besagten Sender (10);
- Übergeben des Tonsignals (12) an ein zur Ausstrahlung geeignetes Übertragungssystem, beispielsweise Radio oder Fernsehen, und Verbreiten des besagten Tonsignals (12) durch einen Übertragungskanal (30);
- Empfangen des besagten Tonsignals (12) durch einen Detektor (41) einer elektronischen Vorrichtung (40), die vom besagten Empfänger (50) verwendet wird, wobei eine spezifische Anwendung (60) auf der besagten elektronischen Vorrichtung (40) installiert ist;
- Decodieren des besagten Tonsignals (12), um den besagten Code (CNR) zu erhalten, wobei das besagte Decodieren durch die besagte Anwendung (60) ausgeführt wird, die das Autorisierungsanforderungsverfahren des Serviceproviders (20) aktiviert;
- Kommunizieren zwischen der besagten Anwendung (60) und dem besagten Serviceprovider (20), wobei der besagte Serviceprovider (20) von der besagten Anwendung (60) den besagten Code (CNR) empfängt und die Autorisierungsanforderung überprüft, um den Zugriff auf nicht verifizierte oder nicht autorisierte Inhalte zu verhindern;
- Zurücksenden der besagten Nachricht (11), die dem besagten Code (CNR) entspricht;
- Anzeigen der besagten Nachricht (11) auf der besagten Vorrichtung (40) des besagten Empfängers (50).

2. Verfahren zum Übertragen von Informationen oder Daten im Allgemeinen nach Patentanspruch 1, wobei die besagte Erzeugung des besagten codierten Tonsignals mindestens gemäß den folgenden Schritten erfolgt:
- Phasen der Transposition der zu übertragenden besagten Informationen oder Daten in eine oder mehrere Bitstrings oder in eine oder mehrere Zeichenfolgen, die zu encodieren sind;
- Encodierphase, d. h. Transformation der besagten einen oder mehreren Strings oder Folgen in Signale mit vorbestimmter Dauer mit überlappenden Frequenzen im Zeitverlauf;
- Speicherung in einer oder mehreren digitalen Audiodateien.

3. Verfahren zum Übertragen von Informationen oder Daten im Allgemeinen nach Patentanspruch 2, wobei die besagten digitalen Audiodateien im MP3-, WAV-, MIDI- oder AAC-Format oder einem anderen Format vorliegen, das von einer elektronischen Vorrichtung wiedergegeben bzw. gelesen werden kann.

4. Verfahren zum Übertragen von Informationen oder Daten im Allgemeinen nach Patentanspruch 1, wobei das besagte codierte Tonsignal aus einer oder mehreren Tonfrequenzen und ggf. auch aus Infraschall bzw. Ultraschall besteht.

5. Verfahren zum Übertragen von Informationen oder Daten im Allgemeinen nach Patentanspruch 2, wobei der besagte Codierschritt einen zweidimensionalen Codierschritt umfasst, der mindestens die folgenden Schritte beinhaltet:
- Bestimmen eines Frequenzbereichs, der A-Werte enthält, die als Oberwellen ausgewählt werden;
- Bestimmen der Gesamtdauer des Tonsignals, die wiederum in T Zeitintervalle unterteilt ist;
- Erstellen einer zweidimensionalen Matrix A x T;
- Einfügen von digitalen Werten in die besagte zweidimensionale Matrix gemäß einem vordefinierten Codierschema, das ggf. darauf abzielt, Redundanz einzuführen;
- Transduzieren der Werte der zweidimensionalen Matrix im akustischen Bereich, wobei diese gemäß den Richtungen von Zeit und Frequenz gelesen werden.

6. Verfahren zum Übertragen von Informationen oder Daten im Allgemeinen nach Patentanspruch 2, wobei der besagte Codierschritt auch die Einführung der Signalredundanz in das codierte Tonsignal zur Rauschdämpfung beinhaltet.

7. Verfahren zum Übertragen von Informationen oder Daten im Allgemeinen nach Patentanspruch 2, wobei der besagte Codierschritt auch die Einführung einer Ende-zu-Ende-Verschlüsselung beinhaltet.

8. Verfahren zum Übertragen von Informationen oder Daten im Allgemeinen nach Patentanspruch 1, wobei das besagte codierte Tonsignal Folgendes umfasst:
- mindestens einen ersten Teil oder Öffnungsmarker (A), der auf den Beginn der Signalübertragung hinweist;
- mindestens einen mittleren Teil (C), der die zu übertragenden besagten encodierten Informationen oder Daten enthält;
- einen möglichen dritten Teil oder Schließungsmarker (B), der auf das Ende der Signalübertragung hinweist.

9. Verfahren zum Übertragen von Informationen oder Daten im Allgemeinen nach dem Patentanspruch 1, wobei der besagte Decodierschritt des besagten codierten Tonsignals gemäß den folgenden Schritten erfolgt:
- Interpretieren der Struktur digitaler Werte in den Zeit- und Frequenzrichtungen des empfangenen Tonsignals;
- Decodieren der digitalen Sequenz mit Beseitigung der Redundanz.

10. Verfahren zum Übertragen von Informationen oder Daten im Allgemeinen nach Patentanspruch 1, wobei die zu übertragenden besagten Informationen oder Daten eine URL-Adresse beinhalten.

11. Nachrichtenübertragungssystem, das konfiguriert ist, um das Verfahren nach einem oder mehreren der vorhergehenden Patentansprüche durchzuführen, wobei das System Folgendes umfasst:
- ein Empfangsmodul (21) eines Serviceproviders (20);
- eine Datenbank (22);
- mindestens eine elektronische Codiervorrichtung (23), in der mindestens ein Verarbeitungsprogramm installiert ist, das zum Codieren der besagten Informationen oder Daten im besagten mindestens einen codierten Tonsignal geeignet ist;
- mindestens einen Übertragungskanal (30) mit mindestens einem Lautsprecher, der das besagte codierte Tonsignal ausgeben kann;
- mindestens ein Mikrofon, das dazu ausgelegt ist, das besagte codierte Tonsignal, das vom besagten mindestens einen Lautsprecher ausgegeben wird, zu empfangen;
- mindestens eine elektronische Vorrichtung des Empfängers (50), die mit dem besagten Mikrofon verbunden ist und in der mindestens ein Verarbeitungsprogramm installiert ist, das mindestens das besagte codierte Tonsignal decodieren kann.

12. System nach Patentanspruch 11, wobei die besagte mindestens eine elektronische Vorrichtung des Empfängers ein Mobiltelefon oder ein Tablet oder eine andere elektronische Vorrichtung ist, die das besagte Mikrofon umfasst und in der das besagte mindestens eine Programm zum Decodieren des besagten codierten Tonsignals installiert ist.

13. System nach Patentanspruch 11, wobei das besagte System mindestens eine weitere elektronische Vorrichtung des Senders (10) umfasst, die das besagte codierte Tonsignal von der besagten mindestens einen elektronischen Codiervorrichtung empfangen kann und das besagte codierte Tonsignal an ein oder mehrere Tonausgabesysteme senden kann, die den besagten mindestens einen Lautsprecher umfassen.

## Revendications

1. Procédé de transmission d'un message (11), entre un émetteur (10) et un ou plusieurs récepteurs (50), le procédé comprenant les étapes suivantes :
- définition dudit message (11) à transmettre par ledit émetteur (10) à au moins un récepteur (50) ;
- envoi dudit message (11) sous forme de fichier numérique à un module de réception (21) d'un fournisseur de services (20) ;
- archivage dudit message (11) dans une base de données (22) ;
- attribution d'un code (CNR) audit message (11), où ledit code (CNR) est la position dudit message (11) dans ladite base de données (22) et contient une commande pour initier une procédure de demande d'autorisation ;
- codage dudit code (CNR) en un signal sonore (12) dans un fichier audio ;
- renvoi dudit signal sonore (12) audit émetteur (10) ;
- assignation dudit signal sonore (12) à un système de transmission adapté à la radiodiffusion, par exemple la radio ou la télévision, et diffusion dudit signal sonore (12) à travers un canal de transmission (30) ;
- réception dudit signal sonore (12) par un détecteur (41) d'un dispositif électronique (40) utilisé par ledit récepteur (50), où une application spécifique (60) est installée sur ledit dispositif électronique (40) ;
- décodage dudit signal sonore (12) pour obtenir ledit code (CNR), où ledit décodage est effectué par ladite application (60), qui active la procédure de demande d'autorisation du fournisseur de services (20) ;
- communication entre ladite application (60) et ledit fournisseur de services (20), où ledit fournisseur de services (20) reçoit de ladite application (60) ledit code (CNR) et vérifie la demande d'autorisation pour empêcher l'accès à un contenu non vérifié ou non autorisé ;
- renvoi dudit message (11) correspondant audit code (CNR) ;
- affichage dudit message (11) sur ledit dispositif (40) dudit récepteur (50).

2. Procédé de transmission d'informations ou de données en général, selon la revendication 1, où ladite génération dudit signal sonore codé se vérifie au moins selon les étapes suivantes :
- phases de transposition desdites informations ou données à transmettre dans une ou plusieurs chaînes de bits ou dans une ou plusieurs séquences de caractères à encoder ;
- phase d'encodage, c'est-à-dire transformation desdites une ou plusieurs chaînes ou séquences en signaux de durée prédéterminée dont les fréquences se chevauchent dans le temps ;
- enregistrement dans un ou plusieurs fichiers audio numériques

3. Procédé de transmission d'informations ou de données en général, selon la revendication 2, où lesdits fichiers audio numériques sont au format mp3 ou wav ou midi ou aac ou tout autre format pouvant être reproduit et/ou lu par un appareil électronique

4. Procédé de transmission d'informations ou de données en général, selon la revendication 1, où ledit signal sonore codé est composé d'une ou plusieurs fréquences sonores et éventuellement également d'infrasons et/ou d'ultrasons.

5. Procédé de transmission d'informations ou de données en général, selon la revendication 2, où ladite étape de codage comprend une étape de codage bidimensionnelle qui comprend au moins les étapes suivantes :
- détermination d'une gamme de fréquences contenant des valeurs A choisies comme harmoniques ;
- détermination de la durée totale du signal sonore, elle-même divisée en intervalles de temps T ;
- réalisation d'une matrice bidimensionnelle A x T ;
- insertion dans ladite matrice bidimensionnelle de valeurs numériques selon un schéma de codage prédéfini, visant éventuellement à introduire une redondance ;
- transduction des valeurs de la matrice bidimensionnelle dans le domaine acoustique, en les lisant selon les directions du temps et de la fréquence.

6. Procédé de transmission d'informations ou de données en général, selon la revendication 2, où ladite étape de codage comprend également l'introduction de la redondance du signal dans le signal sonore codé pour l'atténuation du bruit.

7. Procédé de transmission d'informations ou de données en général, selon la revendication 2, où ladite étape de codage comprend également l'introduction d'un cryptage de bout en bout.

8. Procédé de transmission d'informations ou de données en général, selon la revendication 1, où ledit signal sonore codé comprend :
- au moins une première partie ou marqueur d'ouverture (A) qui indique le début de la transmission du signal ;
- au moins une partie centrale (C) qui contient lesdites informations ou données à transmettre encodées ;
- un éventuel tiers ou un marqueur de fermeture (B) qui indique la fin de la transmission du signal.

9. Procédé de transmission d'informations ou de données en général, selon la revendication 1, où ladite étape de décodage dudit signal sonore codé se vérifie selon les étapes suivantes :
- interprétation de la structure des valeurs numériques dans les directions du temps et de la fréquence du signal sonore reçu ;
- décodage de la séquence numérique avec suppression de la redondance.

10. Procédé de transmission d'informations ou de données en général, selon la revendication 1, où lesdites informations ou données à transmettre comprennent une adresse URL.

11. Système de transmission de messages configuré pour mettre en oeuvre le procédé selon l'une ou plusieurs des revendications précédentes, où le système comprend :
- un module de réception (21) d'un fournisseur de services (20) ;
- une base de données (22) ;
- au moins un dispositif de codage électronique (23) où est installé au moins un programme de traitement adapté au codage desdites informations ou données dans ledit au moins un signal sonore codé ;
- au moins un canal de transmission (30) avec au moins un haut-parleur capable d'émettre ledit signal sonore codé ;
- au moins un microphone adapté pour recevoir ledit signal sonore codé émis par ledit au moins un haut-parleur ;
- au moins un appareil électronique du récepteur (50), connecté audit microphone et dans lequel au moins un programme de traitement, capable de décoder au moins ledit signal sonore codé, est installé.

12. Système selon la revendication 11, où ledit au moins un appareil électronique du destinataire est un téléphone portable ou une tablette ou un autre appareil électronique comprenant ledit microphone et dans lequel ledit au moins un programme de décodage dudit signal sonore codé est installé.

13. Système selon la revendication 11, où ledit système comprend au moins un autre dispositif électronique de l'émetteur (10) capable de recevoir ledit signal sonore codé à partir dudit au moins un dispositif de codage électronique et capable d'envoyer ledit signal sonore codé à un ou plusieurs systèmes d'émission sonore comprenant ledit au moins un haut-parleur
